Europäisches Patentamt

European Patent Office

Office européen des brevets

(11) Publication number: **0 142 996**
**A2**

## (12) EUROPEAN PATENT APPLICATION

(21) Application number: 84308059.9

(22) Date of filing: 21.11.84

(51) Int. Cl.⁴: **B 63 B 21/00**
**F 16 F 9/10**

(30) Priority: 23.11.83 GB 8331219

(43) Date of publication of application:
29.05.85 Bulletin 85/22

(84) Designated Contracting States:
AT BE CH DE FR GB IT LI LU NL SE

(71) Applicant: VICKERS PLC
Vickers House Millbank Tower Millbank
London SW1P 4RA(GB)

(72) Inventor: McCann, James
120 Spottiswoodie Gardens Calder Park
Mid Calder West Lothian Scotland(GB)

(72) Inventor: Wilson, Peter Murray
354 Morningside Road
Edinburgh EH10 4QL Scotland(GB)

(74) Representative: MacDougall, Donald Carmichael et al,
Messrs. Cruikshank & Fairweather 19 Royal Exchange
Square
Glasgow G1 3AE, Scotland(GB)

(54) Mooring boom.

(57) A mooring boom (10) for tethering a floating structure (15) to a tethering station (13) comprises first and second rigid elongate members (11,14) one slidably mounted on the other whereby the boom (10) is of variable length. One end (11A) of the boom (10) is secured to tethering station (13) whilst the other end (14A) of boom (10) is connected to floating structure (15). The boom (10) includes a pneumatic ram arrangement (18) formed by at least one piston and cylinder unit (19) arranged resiliently to resist sliding movement between the members (11,14) in at least one direction.

EP 0 142 996 A2

## MOORING  BOOM

This invention relates to a mooring boom for tethering a floating structure to a tethering station.

According to the present invention there is provided a mooring boom for tethering a floating structure to a tethering station, said boom comprising a first rigid elongate member adapted at one end for secural to said tethering station, a second rigid elongate member adapted at one end for secural to said floating structure, said second member extending in the same direction as said first member and being slidably mounted thereon whereby the boom is of variable length, and pneumatic ram means mounted on the boom and comprising at least one piston and cylinder unit arranged resiliently to resist in at least one direction sliding movement between said members arising from forces imposed on the boom by the floating structure.

It will be understood that the floating structure may be a sea-going vessel such as an oil tanker or the like and the tethering station may be a fixture or otherwise and that the mooring boom of the present invention by virtue of being semi-rigid in length is resistive to movements of the floating structure resulting from environmental forces such as wind, waves, ice pack motion and the like.

The first and second rigid elongate members may be mounted telescopically i.e. one being movable within the other, but of course this is not necessary as the members may be mounted side-by-side to fulfil the functional requirement of rendering the boom extensible and contractable i.e. of variable length.

The pneumatic ram means may be in the form of a single piston and cylinder unit having a gaseous working fluid and being arranged on the boom to resist extension movements thereof.  Alternatively, the piston and cylinder unit may be arranged on the boom to resist contraction movements thereof.    In a still further arrangement the
single piston and cylinder unit may be double-acting and
arranged on the boom to resist both extension and
contraction movements thereof.

The pneumatic ram means may be in the form of a pair
of back-to-back piston and cylinder units each having a
gaseous working fluid and being arranged on the boom to
resist both extension and contraction movements thereof.

The pneumatic ram means may have either its piston or
its cylinder secured to one of the first and second
elongate members, the non-secured or movable component (i.e.
the cylinder or the piston) being actuable by the other of
the first and second elongate members.    The movable
component may be directly actuated so that the magnitude
of ram movement is the same as the magnitude of boom
movement.    Alternatively the movable component may be
indirectly actuated by way of a cable and pulley system
so that the magnitude of ram movement may differ from the
magnitude of boom movement.    Preferably the cable and
pulley system is arranged so that the magnitude of ram
movement is less than the magnitude of boom movement by
a factor of 2 or greater.    The cable and pulley system
may take any conventional format such as chain and
sprocket.

The pneumatic ram means may use any form of gaseous
working fluid, such as air or nitrogen, which is
compressible and preferably the ram means is internally
provided with one or more chambers dimensioned to store
the working fluid when in its fully compressed state
with the piston abutting the cylinder head.    In an
alternative form the pneumatic ram means operates in
tension and is provided with one or more chambers
dimensioned to store the gaseous working fluid when the
piston abuts the cylinder back wall.    Preferably also,
a pneumatic control system is connected to the ram means and arranged to determine the initial pressure of the working fluid.  The control system may also determine limits of compression rate of the working fluid by dynamic injection or exhaust of working fluid.

Embodiments of the present invention will now be described by way of example with reference to the accompanying drawings, in which:

Fig. 1 schematically illustrates a mooring boom in accordance with the present invention tethering a floating structure to a tethering station;

Fig. 2 schematically illustrates details of the Fig. 1 boom;

Fig. 3 illustrates details of a relatively compact ram arrangement for a boom in accordance with the present invention;

Figs. 4 and 5 illustrate further alternative systems for rendering the ram arrangement more compact;

Fig. 6 schematically illustrates an alternative form of boom in which the pneumatic ram operates in tension; and

Fig. 7 illustrates one piston and cylinder unit of the ram schematically shown in Fig. 6.

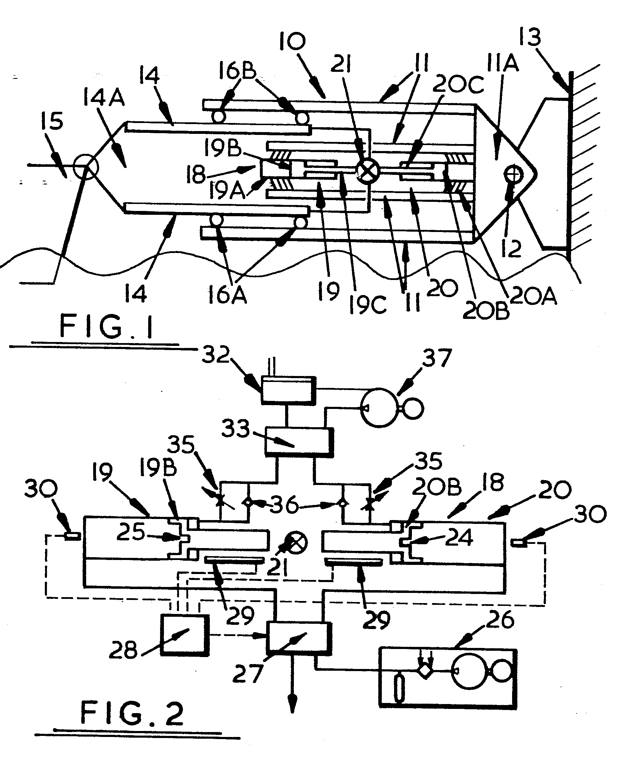

As is shown in Fig. 1 of the drawings boom 10 is formed by a first rigid elongate member 11 which at its end 11A is secured for example by means of pin 12 to a tethering station 13 which in this instance is illustrated as being a fixture.  Boom 10 also includes a second rigid elongate member 14 having an end 14A to which is secured a floating structure 15 in this instance in the form of a sea-going vessel.  Member 14 extends in the same direction as member 11 and is slidably mounted thereon as is schematically depicted by bearings 16A, 16B so that the boom 10 is of variable length depending upon the relative positions of members 11 and 14 which of course is determined by the force imposed on the boom 10 by the vessel 14 resulting from environmental forces affecting the vessel 15.

In order resiliently to resist changes in boom length the boom 10 is provded with a pneumatic ram arrangement 18 which in this embodiment is formed by two piston and cylinder units 19,20 arranged back to back and each having its cylinder 19A,20A secured to member 11. The pistons 19B,20B of the units have rods 19C, 20C which extend into abutment with an actuation member 21 which conveniently is in the form of a pin carried by member 14. Units 19 and 20 are single acting and each chamber thereof is filled with a gaseous working fluid. Accordingly arrangement 18 bidirectionally resists changes in boom length in that when member 14 is pushed by vessel 15 towards station 13 actuation member 21 pushes piston 20B towards station 13 thereby compressing the working fluid in the chamber of unit 20 which progressively provides a resisting force to the load until the piston 20B abuts the cylinder head. Likewise when member 14 is pulled by vessel 15 away from station 13 actuation member 21 pushes piston 19B and causes compression of the working fluid in the chamber of unit 19 which progressively provides a resisting force to the load until piston 19B abuts the cylinder head. The initial level of resisting force provided by either unit 19 or unit 20 is dependent upon the initial pressure of the working fluid and can be preset at any desired level which need not be the same for both unit 19 and unit 20 because units 19 and 20 are mechanically arranged to have their respective pistons 19B, 20B seated against the cylinder back wall when members 11, 14 are in a predetermined position.

Fig. 2 illustrates ram arrangement 18 in greater detail from which it can be seen that each piston and its rod is hollowed out to provide a chamber 24, 25 dimensioned to store the working fluid when in its fully compressed state. Each cylinder head may also be hollowed out to provide additional volume to chambers 24, 25 if necessary. In order to charge the working chambers of units 19, 20 with working fluid a conventional pump, filter and accumulator set 26 is provided which is coupled to units 19, 20 via a valve assembly 27. Assembly 27 may be manually controlled if so desired or alternatively may be dynamically controlled by controller 28 in response to signals obtained at units 19,20 by means of transducers 29,30 of which transducer 29 senses extent of piston rod movement and transducer 30 senses working fluid pressure. With this arrangement the working fluid compression rate may be dynamically controlled by injecting extra working fluid or exhausting working fluid from unit 19, 20 as appropriate in order to confine compression rate within preset limits.

In order to lubricate units 19, 20 (particularly the piston bearings, seals and gland seals thereof) and to prevent corrosion in the interior of these units the rear of each piston 19B, 20B is flooded with liquid lubricant at substantially zero pressure. This lubricant is supplied by header tank 32 via valve manifold 33 and each supply line conveniently incorporates an orifice 35 in parallel with a one-way check valve 36 arranged to permit free passage of lubricant from tank 32. Orifice 35 may be preset or controllable and is arranged to control the rate of exhaustion of lubricant to provide safety hydraulic retardation and increased load characteristics as may be required to complement the pneumatic action of units 19,20. For the purposes of maintaining units 19,20 a pump set 37 may be provided whereby the pistons of units 19,20 can be pumped towards their respective cylinder heads.

If during operation a malfunction or breakage occurs the compressed gas behind the pistons would accelerate them to an unacceptable level due to the sudden release of load. In this condition the transducers could sense the increase in velocity or increase in pressure drop across the orifice and cause the orifice to close thus restricting the flow of lubricant liquid to tank and induce a back pressure on the piston. This back pressure would retard the piston and thus allow it to coast to the end of the cylinder.

The displacement transducers may also be employed to provide the operator with a continuous read-out of position and can be used to initiate an alarm when the displacement exceeds a predetermined value. The pneumatic transducers may also be employed to provide the operator with a continuous read-out of load (both pull and push) and can be used to initiate an alarm when the load exceeds a predetermined value. Hydraulic transducers may be provided to give the operator a continuous read-out of back pressure on the piston and can be used to initiate an alarm when a predetermined level is exceeded.

As has been explained the boom 10 of Fig. 1 has two piston and cylinder units 19, 20, and provides bidirectional resistance to movements between members 11, 14 of the boom 10. Either unit 19 or unit 20 may be omitted to provide unidirectional resistance. Of course, units 19, 20 may be arranged with their reespective piston rods secured to member 11 whilst their respective cylinders are actuable by actuation member 21. Furthermore it will be evident that units 19,20 may be secured to member 14 and actuated by member 11 in mechanically equivalent manner.

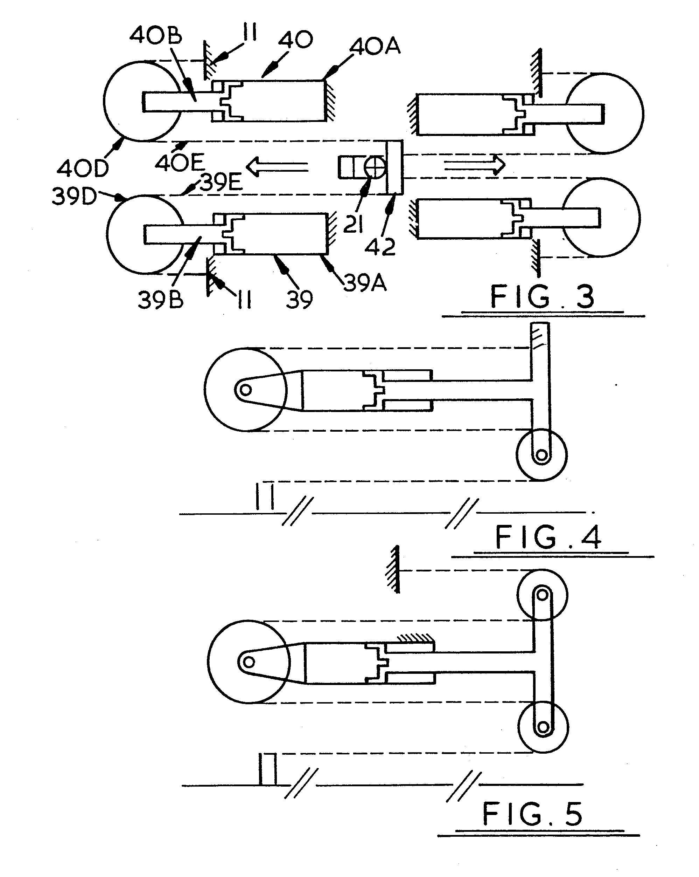

Another embodiment of ram arrangement 18 is illustrated in Fig. 3 which in addition to having two piston and cylinder units acting in parallel to provide the desired restoring force is arranged such that the piston rods are indirectly actuated by member 21 by way of respective cable and pulley systems. Thus rods 39B, 40B of units 39,40 carry respective pulleys 39D,40D, around which are entrained cables 39E,40E, one end of cables 39E,40E being secured to member 11 as are cylinders 39A, 30A whilst the other end of cables 39E,40E are secured to a yoke 42 in abutment with actuation member 21. Accordingly the magnitude of movement of rods 39B,40B, is half that of member 21 so that the ram arrangement is rendered compact. In order to provide bidirectional resistance to movements of member 21 a second pair of piston and cylinder units acting in parallel is similarly but oppositely actuated by member 21 via a cable and pulley system.

Fig. 4 schematically illustrates an alternative cable and pulley system providing a factor of 3 between piston rod movement and actuation member movement whilst the arrangement of Fig. 5 provides a factor of 4. It will be appreciated that only one piston and cylinder unit is illustrated in each case in the interest of clarity.

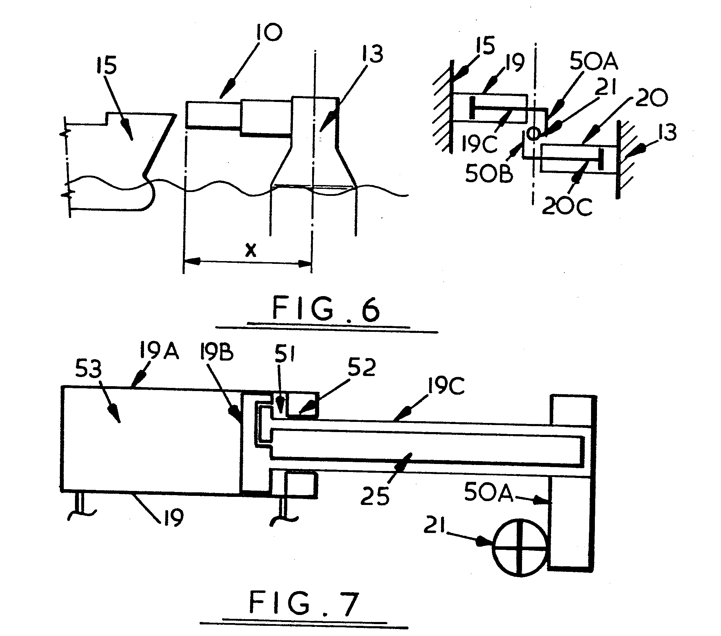

In the embodiments of Figs. 1-5 the various forms of the pneumatic ram each operate in compression. That is a compressive force is applied by the load to the piston (or to the sliding cylinder) and the gaseous working fluid is loaded into the chamber between the piston and the cylinder head. In the embodiment of Fig. 6, as exemplified by Fig. 7, the mechanically inverse arrangement pertains so that a tensile force is applied to the piston (or to the sliding cylinder) and the gaseous working fluid is loaded into the chamber between the piston and the cylinder back wall. In each case, of course, the working fluid is compressed to provide the progressively increasing resisting force to the load.

In Fig. 6 when actuation member 21 moves due to the vessel 15 moving towards the tethering station 13 it abuts arm 50A secured to and laterally extending from rod 19C of piston and cylinder unit 19. When member 21 moves away from station 13 it abuts arm 50B secured to and laterally extending from rod 20C of piston and cylinder unit 20.

Fig. 7 shows unit 19 of Fig. 6 in greater detail from which it will be seen that the working fluid is provided in chamber 51 located between the piston 19B and the cylinder back wall 52 and as previously the piston and rod 19C are hollowed out to provide air bank 25. Similarly chamber 53 located between the piston and the cylinder head is flooded with liquid lubricant.

It will be understood that the present invention is particularly concerned with mooring booms of relatively massive construction capable of restraining the force magnitudes imposed by sea-going vessels such as large oil tankers. Thus the restoring forces generated by the piston and cylinder units described above may be of the order of several thousand tonnes and the required dimensions of the ram arrangement is of the order of several tens of meters in length and several meters in diameter. By way of example the piston of each unit may have a stroke of the order of 5 to 10 meters and a diameter of the order of 1 or 2 meters. By virtue of the mooring boom according to the present invention the sea-going vessel is held relatively fixed in position, being fixed within the predetermined excursion limits imposed by the ram arrangement, so that activities such as cargo transfer can be undertaken relatively safely.

014299ꞁ

## CLAIMS

1. A mooring boom for tethering a floating structure to a tethering station, said boom being characterised by a first rigid elongate member (11) adapted at one end for secural to said tethering station (13), a second rigid elongate member (14) adapted at one end for secural to said floating structure (15), said second member (14) extending in the same direction as said first member (11) and being slidably mounted thereon whereby the boom (10) is of variable length, and pneumatic ram means (18) mounted on the boom (10) and comprising at least one piston and cylinder unit (19) arranged resiliently to resist in at least one direction sliding movement between said members (11,14) arising from forces imposed on the boom (10) by the floating structure.

2. A mooring boom as claimed in claim 1, characterised in that the pneumatic ram means (18) comprises a single piston and cylinder unit (19) arranged on the boom (10) to resist extension movements thereof.

3. A mooring boom as claimed in claim 1, characterised in that the pneumatic ram means (18) comprises a single piston and cylinder unit (20) arranged on the boom (10) to resist contraction movements thereof.

4. A mooring boom as claimed in claim 1, characterised in that the pneumatic ram means (18) comprises a pair of back-to-back piston and cylinder units (19,20) arranged on the boom (10) to resist both extension and contraction movements thereof, each said unit (19,20) comprising a piston component (19B,20B) and a cylinder component (19A,20A) with one of said components (19A,19B,20A,20B) being rigidly secured to one of the first and second elongate members (11,14) and the other of said components (19A,19B,20A,20B) being actuable by the other of the first and second elongate members (11,14).

5. A mooring boom as claimed in claim 4, characterised in that actuation of said other component (19A,19B,20B,20B) by said other member (11,14) is indirectly effected by a cable and pulley system (40D,40E) so that the magnitude of ram movement differs from the magnitude of boom movement.

6. A mooring boom as claimed in claim 5, characterised in that the cable and pulley system (40D,40E) is arranged so that the magnitude of ram movement is less than the magnitude of boom movement.

7. A mooring boom as claimed in any preceding claim, characterised in that the ram means (18) is internally provided with one or more chambers (24,25) dimensioned to store the pneumatic working fluid when the ram means (18) is in its fully compressed or extended state.

8. A mooring boom as claimed in any preceding claim, characterised in that a pneumatic control system (26,27) is connected to the ram means (18) and arranged to determine the initial pressure of the pneumatic working fluid.

9. A mooring boom as claimed in claim 8, characterised in that said control system (26,27) is arranged to monitor the compression rate of the pneumatic working fluid during operation of the boom (10), and to limit said rate by selective injection or exhaust of pneumatic working fluid.

10. A mooring boom as claimed in any preceding claim, characterised in that lubrication fluid is fed to said ram means (18) under the control of a lubrication fluid supply system (32,33,37).

0142996

1/3

FIG.1

FIG.2

0142996

FIG. 3

FIG. 4

FIG. 5

FIG.6

FIG.7